# EUROPEAN PATENT SPECIFICATION

(11) **EP 1 510 724 B1**
(45) Date of publication and mention of the grant of the patent: **03.01.2007**
(21) Application number: 03733220.2
(22) Date of filing: 30.05.2003
(51) Int. Cl.: F16F 15/12, F16F 15/126

(54) **TORTIONAL DAMPER PULLEY**
DREHMOMENTDÄMPFERSCHEIBE
POULIE AVEC AMORTISSEUR DE TORSION

(30) Priority: 31.05.2002 JP 2002159192; 11.04.2003 JP 2003108367
(43) Date of publication of application: 02.03.2005
(73) Proprietor: FUKOKU Co., Ltd., Ageo-shi, Saitama 362-0003 (JP)
(72) Inventor: WATANABE, Hideaki c/o FUKOKU CO., LTD., Ageo-shi, Saitama 362-0003 (JP); OHKI, Kazumi c/o FUKOKU CO., LTD., Ageo-shi, Saitama 362-0003 (JP); YOSHIDA, Takashi c/o FUKOKU CO., LTD., Ageo-shi, Saitama 362-0003 (JP); ISONO, Masakazu c/o FUKOKU CO., LTD., Ageo-shi, Saitama 362-0003 (JP)
(74) Representative: Melzer, Wolfgang
(86) International application number: PCT/JP2003/006889
(87) International publication number: WO 2003/102441

(56) References cited:
- EP-A1- 0 013 129
- WO-A1-98/51939
- JP-A- 10 202 332
- JP-A- 11 230 255
- JP-A- 2001 355 678
- JP-U- 1 073 544

## Description

### TECHNICAL FIELD

The present invention relates to a torsional damper pulley mounted on a revolving shaft of an internal combustion engine such as an engine of an automobile.

### BACKGROUND ART

A pulley taking power for belt-driving of a radiator fan or the like from a crankshaft of an internal combustion engine is formed to be a torsional damper with an elastic solid being incorporated in it to absorb a torsional vibration of the crankshaft, and with an inertia mass in a pulley body, as described in document JP 2001 355 678.

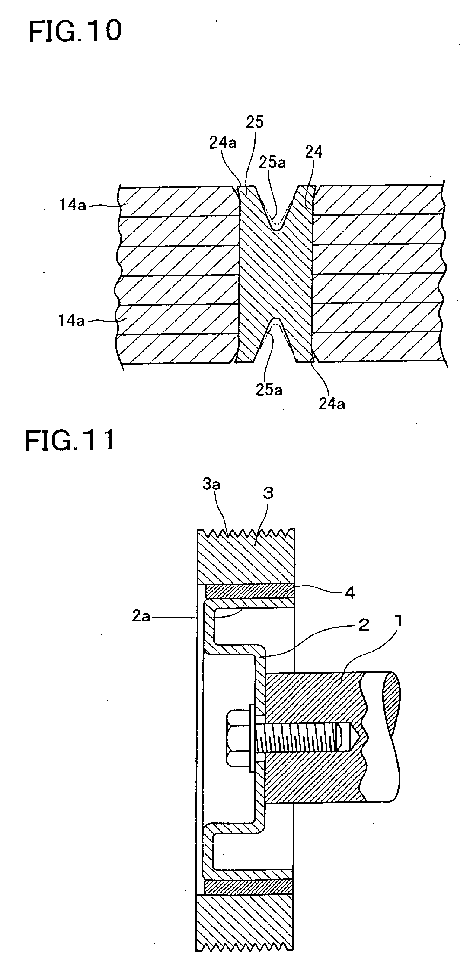

As shown in FIG. 11, the torsional damper pulley is constructed of a hub 2 fixed to a crankshaft 1 of an internal combustion engine, an annular pulley body 3 coaxially placed outside the hub 2 in its diameter direction, and an elastic solid 4 interposed between an outer circumferential surface of an annular fixing portion 2a of the hub 2 and an inner circumferential surface of the pulley body 3. A pulley groove 3a in a suitable shape corresponding to a shape of a surface of a driving belt is provided at an outer circumferential portion of the pulley body 3 around which the driving belt is passed. The pulley body 3 is produced to have the inertia mass corresponding to a difference in a vibration characteristic due to a difference in an internal combustion engine to which the damper pulley 3 is applied, such as a difference in a vehicle type on which the internal combustion engine is loaded, for example.

Conventionally, the pulley body 3 is produced mainly by the following two methods. One of them is a method of cutting an annular solid material to obtain an annular element of a desired size and form a pulley groove on its outer circumferential portion. The other one is a method of casting an annular element having a pulley groove on its outer circumferential portion, and finishing the annular element and the pulley groove by cutting.

The above-described cutting method requires enormous efforts and causes much waste of material with a large cutting amount. On the other hand, the casting method requires cutting to eliminate roughness on a cast surface and provide size precision, which makes the manufacturing process a little complicated, but since the rough body of the pulley body is obtained by casting, the method is rich in manufacturability and causes less waste of material with less cutting amount as compared with the cutting method. Accordingly, casting is more frequently used for manufacturing of pulley bodies in general.

However, the casting method lacks in general versatility, because if the internal combustion engines to which the damper pulleys are applied are changed, it becomes necessary to prepare a special casting die corresponding to the vibration characteristic of the internal combustion engine. There also exits the problem of high cost of facilities since the cost of the facilities including the casting die are expensive.

For the above reason, the development of a torsional damper pulley is desired which is excellent in general versatility and is produced easily with reduced manufacturing cost.

Consequently, an object of the present invention is to provide a torsional damper pulley, which is improved in general versatility, easily produced, and makes it possible to reduce manufacturing cost.

### DISCLOSURE OF INVENTION

In order to solve the above-described object, the present invention is a torsional damper pulley comprising a hub fixed at a revolving shaft of an internal combustion engine, an annular pulley body substantially rectangular in section, which is coaxially placed outside the hub in its diameter direction, has a pulley groove at an outer circumferential portion and has a predetermined inertia mass, and an elastic solid interposed between an outer circumferential surface of the hub and an inner circumferential surface of the pulley body, characterized in that the pulley body comprises an annular frame substantially U-shaped in section, which has a concave portion open in its axial direction and has a pulley groove at an outer circumferential portion, and an annular inertia mass element fixed in the concave portion.

In the present invention, the pulley body is constructed by the frame having the pulley groove and an inertia mass element attached to the frame, and therefore manufacturing of the pulley body is facilitated. Even if the internal combustion engine is changed to an internal combustion engine with a different vibration characteristic, it can be handled by replacing the inertia mass element corresponding to the vibration characteristic of the internal combustion engine, and therefore general versatility of the damper pulley is enhanced. The frame can be formed by cold forging or pressing work of the plate material, and therefore the number of working process steps and working time can be reduced.

According to the present invention, it is preferred that the inertia mass element be formed by overlaying a plurality of annular plates on each other and bonding them. Thus, the mass of the inertia mass element can be easily adjusted by increasing and decreasing the number of annular plates to be laminated, increasing and decreasing the specific gravity of the annular plates, and the like. Accordingly, the adjustment of the mass of the inertia mass body corresponding to the vibration characteristic of the internal combustion engine to which the damper pulley is applied can be facilitated, and general versatility of the damper pulley can be further improved. Since all the work for the pulley body and the hub including the inertia mass element can be made only by a press, it is possible to produce the damper pulleys through a production line, and thus the cost of the damper pulleys can be reduced.

An adhesive can be used for bonding the laminated annular plates, but in order to improve productivity, it is preferred to form the engaging pieces at the annular plates and mechanically bond them by a press. According to the present invention, cut-and-bent pieces are formed on a surface of the annular plate with spaces between them in a circumferential direction, and by overlaying a plurality of annular plates on each other so that the cut-and-bent pieces are overlaid on each other and pressing them, the plurality of annular plates can be bonded. Alternatively, dowels protruded from one surface of the annular plate to the other surface are formed on the annular plate with spaces between them in a circumferential direction, and by overlaying a plurality of annular plates on each other so that the dowels are displaced in the circumferential direction and pressing them, the plurality of annular plates can be bonded. In this case, it is preferred that a convex portion of the dowel is formed to be narrower than a concave portion. Thus, the bite of the convex portion into the surface of the annular plate becomes sharp and biting force increases, and bonding strength of the annular plates to each other is increased. In addition, the shape stability of the obtained inertia mass body is improved.

According to the present invention, it is preferred that the annular plate be formed by joining a plurality of arc-shaped ring pieces in an annular form. The annular plate may be punched out in its entirety by a press, but if a plurality of parts are assembled to form the annular plate, waste of the material can be eliminated. According to the present invention, a plurality of ring pieces are placed in an annular form, and by close-fitting a protruded piece formed at one end of one ring piece of the adjacent ring pieces into a hole formed at a corresponding one end of the other ring piece, a plurality of ring pieces are joined in the annular form. In this case, a concave portion can be formed at least at one side of a base portion of the protruded piece of the ring piece, and a protruded portion fitted in the concave portion is formed at a corresponding side of an open end of the hole. Thus, even if the hole is pressed to expand by the protruded piece on press-fitting of the protruded piece and the hole, deformation is pressed down and absorbed at the fitting portion of the convex portion of the base of the hole and the concave portion of the base of the protruded piece, and therefore the outer portion of the ring piece in the radius direction is securely prevented from opening outward.

An adhesive can be used to fix the inertia mass element in the concave portion, but the inertia mass element can be fixed by being press-fitted into the concave portion for simplicity. According to the present invention, the inertia mass element comprises an annular plate having an inner diameter to be in pressure-contact with an inner surface of the inner circumferential wall for defining the concave portion of the pulley body, and the inertia mass element is fixed by being press-fitted into the concave portion. Alternatively, the inertia mass element comprises an annular plate having an outer diameter to be in pressure-contact with an inner surface of an outer circumferential wall for defining the concave portion of the pulley body, and the inertia mass element is fixed by being press-fitted into the concave portion. Alternatively, the inertia mass element comprises a first annular plate having an outer diameter to be in pressure-contact with an inner surface of an outer circumferential wall for defining the concave portion of the pulley body, and a second annular plate having an inner diameter to be in pressure-contact with an inner surface of an inner circumferential wall for defining the concave portion, and the inertia mass element is fixed by being press-fitted into the concave portion. Furthermore, the inertia mass element may be fixed to the concave portion of the pulley body with fastening means including a bolt.

According to the present invention, convex portions outward or inward in a diameter direction may be provided at the same positions in a width direction of the outer circumferential portion of the hub and an inner circumferential wall for defining a concave portion of the pulley body. Thus, the elastic solid can be surely prevented from falling off.

According to the present invention, a wall portion for connecting an inner circumferential wall and an outer circumferential wall for defining the concave portion of the pulley body is omitted, whereby the concave portion is formed to be a through-hole open to both sides in an axial direction, the inertia mass element can be formed by overlaying a plurality of annular plates on each other and bonding them so that at least one annular plate having an inner diameter and outer diameter to be in pressure-contact with the inner circumferential wall and outer circumferential wall is placed, and the inertia mass element is pressure-fitted into the through-hole.

### BRIEF DESCRIPTION OF DRAWINGS

FIG. 1 is a sectional view (a) showing an essential part of one embodiment of a torsional damper pulley of the present invention, and an exploded view (b) showing press-fitting of an inertia mass element into a concave portion of a frame of the damper pulley;
FIG. 2 is a sectional view showing an essential part of another embodiment of the present invention;
FIG. 3 is a sectional view showing an essential part of still another embodiment of the present invention;
FIG. 4 is a sectional view showing an essential part of yet another embodiment of the present invention;
FIG. 5 is a sectional view showing an essential part of still another embodiment of the present invention;
FIG. 6 is a sectional view showing an essential part of yet another embodiment of the present invention;
FIG. 7 is a plan view showing a ring piece used for an annular plate of the inertia mass element of the damper pulley of the present invention;
FIG. 8 shows a plan view (a) for showing an improved joining portion by close-fitting for joining the ring pieces in FIG. 7 to each other and plan view (b) for showing a joining portion before improvement;
FIG. 9 is a sectional view (a) showing annular plates bonded with dowels and an enlarged sectional view (b) of the dowel;
FIG. 10 is a sectional view showing bonding of the annular plates to each other by a pin usable in the present invention; and
FIG. 11 is a sectional view showing a conventional torsional damper pulley.

### BEST MODE FOR CARRYING OUT THE INVENTION

Embodiments of the present invention will be explained in detail below based on the drawings.

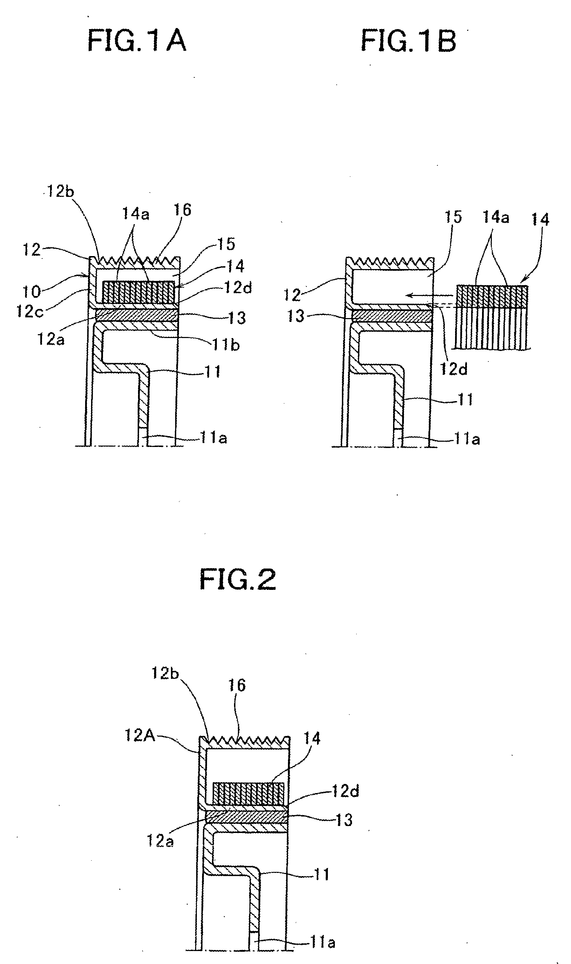

FIG. 1 is a sectional view showing an essential part of one embodiment of a torsional damper pulley of the present invention. The torsional damper pulley is constructed of a hub 11 fixed with a bolt at a revolving shaft of an internal combustion engine, for example, a crank shaft (not shown) of an automobile engine via a mounting hole 11a, an annular pulley body 10 coaxially placed outside in a diameter direction of an annular fixing portion 11b on an outer circumference of the hub 11, and an elastic solid 13 interposed between an outer circumferential surface of the annular fixing portion 11b and an inner circumferential surface of the pulley body 10.

The pulley body 10 is constructed of an annular frame 12 substantially U-shaped in section, having a concave portion 15 open at one side in its axial direction, and an annular inertia mass element 14 axially inserted and fixed in the concave portion 15 of the frame 12. The frame 12 is formed of an inner circumferential wall 12a, an outer circumferential wall 12b and an orthogonal wall 12c for connecting them, which defines the above-described concave portion 15 inside to be a substantially U-shaped in section. On an outer surface of the outer circumferential wall 12b of the frame 12, provided is a pulley groove 16 in a suitable shape corresponding to the shape of the surface of a driving belt (not shown) to be passed around the outer surface of the outer circumferential wall 12b.

The inertia mass element 14 is a laminate made by overlaying annular plates 14a on each other and bonding them, and the inertia mass element 14 is fixed by being press-fitted into the concave portion 15. In this embodiment, an inner diameter of the annular plate 14a is made slightly smaller than an outer diameter of the inner circumferential wall 12a of the frame 12, and an inner circumferential surface of the annular plate 14a is brought into pressure-contact with an inner surface of the inner circumferential wall 12a. It is preferred to form a taper 12d at an end edge of the opening of the inner circumferential wall 12a of the frame 12 and expand the diameter of the concave portion 15 outward at the end edge of the opening in order to guide the inner circumferential surface of the inertia mass element 14 and facilitate press-fitting of the inertia mass element 14 into the concave portion 15.

An adhesive may be used instead of press-fitting to fix the inertia mass element 14 in the concave portion 15. An adhesive may be also used in addition to press-fitting. The concave portion 15 may be filled with a resin after the inertia mass element 14 is inserted into the concave portion 15. If the concave portion 15 is filled with the resin, it becomes possible to obtain an anti-rusting effect, and in addition, it becomes possible to prevent the inertia mass element 14 from falling off or being detached from the concave portion 15 even when abnormal vibrations add to the damper pulley.

A frame 12 including the pulley groove 16 can be formed by cold forging of a plate material or by press working of a plate material. As the plate material, a cold-rolled steel plate defined by Japanese Industrial Standard JIS G3141 or a steel strip SPCC (for general purpose), SPCD (for drawing), SPCE (for deep drawing) and the like can be used. If the frame 12 is formed of a thin plate or a flexible material so that the inner circumferential wall 12a can be bent by press-fitting of the inertia mass element 14 into the concave portion 15, a compression force can be applied to the elastic solid 13, and durability against repeated expansion and contraction of the elastic solid 13 is increased.

An adhesive can be used to bond the annular plates 14a to each other to form the inertia mass element 14, but as will be described later, a bonding piece is formed at the annular plate 14, and by pressing the laminate of the annular plates, the annular plates can be mechanically bonded to each other with the bonding piece. The annular plate 14a itself can be formed by pressing work of a plate material. As for pressing work of the annular plate 14a, the annular plate may be punched out in its entirety, or arc-shaped ring pieces, which are a plurality of divided parts of the annular plate in its circumferential direction, may be punched, while engaging pieces are formed at the ring pieces at the same time, and the ring pieces may be bonded by a press to form the annular plate. As the plate material, SPCC, SPCD, SPCE and the like can be used.

The elastic solid 13 consists of a ring of an elastic material, for example, a ring of rubber formed by vulcanizing, and this is attached by being press-fitted between the annular fixing portion 11b of the hub 11 and an outer surface of the inner circumferential wall 12a of the frame 12. The hub 11 is made by press-forming the plate material so that the hub 11 has the annular fixing portion 11b at its outer circumference.

According to the torsional damper pulley of this embodiment, the pulley body 10 is constructed of two devided parts, i.e. the frame 12 having the pulley groove 16 and the inertia mass element 14 mounted in the concave portion 15 of the frame 12, and therefore production of the pulley body 10 is facilitated. Since the frame 12 can be formed by cold forging or pressing work of the plate material, the number of process steps and working hours can be reduced. Further, all the works for the pulley body including the inertia mass element and the hub can be performed only by a press, and therefore it is possible to produce damper pulleys through a production line, whereby cost of the damper pulleys can be reduced.

Since the inertia mass element 14 is formed by laminating a plurality of annular plates 14a, the mass of the inertia mass element can be adjusted by increasing and decreasing the number of annular plates 14a to be laminated and thickness of the annular plates. By applying pressure to the inertia mass element 14 in the thickness direction by a press, the inertia mass element 14 having high size precision can be obtained. Accordingly, the mass adjustment of the inertia mass element 14 corresponding to the vibration characteristic of the internal combustion engine to which the damper pulley is applied can be facilitated, thus making the damper pulley high in general versatility. The mass adjustment of the inertia mass element 14 can be also realized easily by using the annular plates with different specific gravities.

Since the elastic solid 13 exhibits a damping property by converting energy of the torsional vibrations into heat, the life of the elastic solid 13 is sometimes reduced when excessive torsional vibration is continuously applied to the damper pulley. If the annular plates with different outer diameters are laminated and gaps are provided at the outer circumferential portions between the annular plates, while an air hole for introducing a flow of air caused by rotation of the damper pulley from one direction and an air hole for discharging from the other direction are provided at the frame 12, the heat of the elastic solid 13 can be released outside via the frame 12, thus making it possible to improve durability of the elastic solid 13.

In the above-described embodiment 1, the inner diameters of all the annular plates 14a constructing the inertia mass element 14 are made smaller than the outer diameter of the inner circumferential wall 12a of the frame 12, and all the annular plates 14a are pressed in contact with the inner surface of the inner circumferential wall 12a, but the inner diameters of some of the annular plates 14a may be made smaller than the outer diameter of the inner circumferential wall 12a and may be pressed in contact therewith.

FIG. 2 shows another embodiment of the present invention. This embodiment differs in the point that the frame 12 of the pulley body 10 in the damper pulley in FIG. 1 is changed to a frame 12A with the increased outer diameter. For example, the internal combustion engines having the same vibration systems may sometimes require the diameter of the damper pulley to be changed, for example, require an increase in the diameter for the reason of the difference in the size of the engine rooms, auxiliary machines, and the like according to the vehicle bodies.

In the damper pulley of the present invention, the inertia mass element 14 mainly bears the inertia mass of the pulley body 10 by dividing the pulley body 10 into the frame 12 and the inertia mass element 14, and therefore it is possible to keep the inertia mass of the frame 12A within an allowable range even if the outer diameter is changed. It is preferred to produce the frame 12A by using a material as light as possible to reduce an increase in the mass by the amount of the increase in the outer diameter.

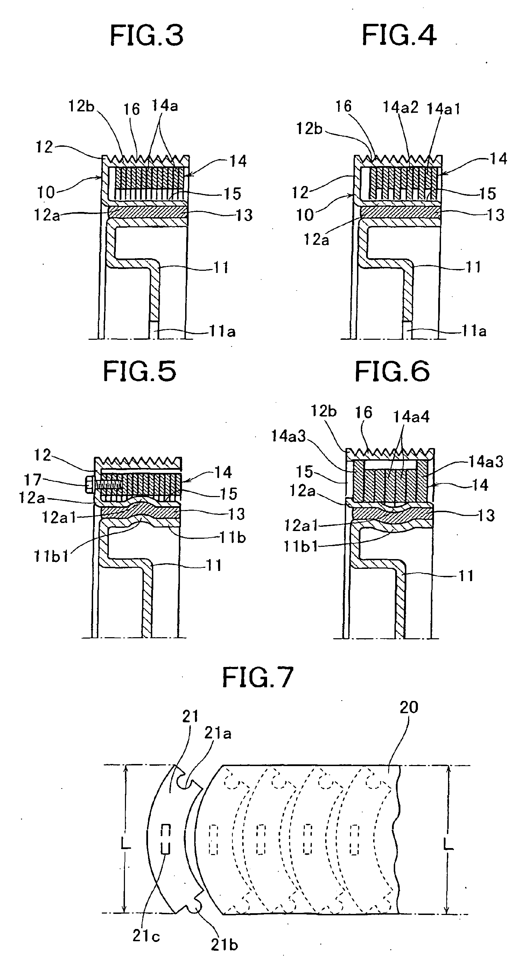

FIG. 3 shows still another embodiment of the present invention. In this embodiment, the annular plate 14a of the inertia mass element 14 has a slightly larger outer diameter than the inner diameter of the outer circumferential wall 12b of the frame 12, the inertia mass element 14, which is press-fitted into the concave portion 15 of the frame 12, is in pressure-contact with the inner surface of the outer circumferential wall 12b on the outer surfaces of the annular plates 14a, and the inertia mass element 14 is fixed in the concave portion 15.

According to the above pulley body 10, the outer circumferential wall 12b of the frame 12 is supported from inside with the inertia mass element 14, and therefore the outer circumferential wall 12b can be reinforced. Accordingly, it becomes possible to use for the frame 12 a thin plate material which for itself has possibility of deformation of the outer circumferential wall 12b when an excessive tensile force is exerted thereon from the driving belt passed around the pulley body 10.

In the above embodiment 3, all the annular plates 14a constructing the inertia mass element 14 is in pressure-contact with the inner surface of the outer circumferential wall 12b of the frame 12, but the outer diameters of some of the annular plates 14a may be made larger and only these annular plates may be in pressure-contact with the inner surface of the outer circumferential wall 12b.

FIG. 4 shows yet another embodiment of the present invention. In this embodiment, the inertia mass element 14 is formed by alternately laminating first annular plates 14a1 having outer diameters to be in pressure-contact with the inner surface of the outer circumferential wall 12b of the frame 12, and second annular plates 14a2 having such outer diameters and inner diameters to be in pressure-contact with the inner surface of the inner circumferential wall 12a and the inner surface of the outer circumferential wall 12b of the frame 12.

If such an inertia mass element 14 is press-fitted into the concave portion 15 of the frame 12, the inner circumferential wall 12a and the outer circumferential wall 12b of the frame 12 are supported from inside of the inertia mass element 14, and therefore the inner circumferential wall 12a and the outer circumferential wall 12b can be reinforced.

In the above embodiment 4, the outer diameters of some of the annular plates 14a1 may be made larger to be in pressure-contact only with the inner surface of the outer circumferential wall 12b of the frame 12. The inner diameters of some of the annular plates 14a2 may be made smaller to be in pressure-contact only with the inner surface of the inner circumferential wall 12a of the frame 12. The annular plates 14a2 do not necessarily have to be pressed in contact with the inner surface of the outer circumferential wall 12b of the frame 12.

FIG. 5 shows still another embodiment of the present invention. In this embodiment, convex portions 11b1 and 12a1 outward in their respective diameter directions are placed at the same positions in the width direction of the annular fixing portion 11b of the hub 11 and the inner circumferential wall 12a of the frame 12. The convex portions 11b1 and 12a1 may be placed at a plurality of spots along the circumferential direction. The convex portions 11b1 and 12a1 may be placed to face inward in the diameter directions.

According to the above, the elastic solid 13 press-fitted into a space between the inner circumferential wall 12a of the frame 12 and the annular fixing portion 11b of the hub 11 can be surely prevented from falling off.

In this embodiment, the inertia mass element 14 inserted into the concave portion 15 of the frame 12 is fixed in the concave portion 15 by inserting a bolt 17 from an outer surface of the orthogonal wall 12c of the frame 12 into the inertia mass element 14. As in this embodiment, fixing of the inertia mass element 14 does not have to be performed by press-fitting. As fixing means, a pin and an adhesive are also possible other than a bolt.

FIG. 6 shows yet another embodiment of the present invention. In this embodiment, the orthogonal wall 12c for connecting the inner circumferential wall 12a and the outer circumferential wall 12b of the frame 12 of the embodiment 1 is omitted, whereby the concave portion 15 is formed to be a through-hole open to both sides in the axial direction. Namely, the frame 12 is constructed by inner and outer annular strips.

Annular plates 14a3 have the inner diameters and outer diameters to be in pressure-contact with the inner surfaces of the inner circumferential wall 12a and the outer circumferential wall 12b. A plurality of annular plates 14a4 and 14a3 are overlaid and bonded so that the annular plates 14a3 are located at both ends, whereby the inertia mass element 14 is formed. The inertia mass element 14 is press-fitted into the concave portion 15 in the form of a through-hole, so that the outer circumferential wall 12b is supported from inside with the inertia mass element 14.

Convex portions 11b1 and 12a1 inward in the respective diameter directions are placed at the same positions in the width directions of the annular fixing portion 11b of the hub 11 and the inner circumferential wall 12a of the frame 12 to prevent the elastic solid 13 from falling off.

According to the embodiment 6, not only the mass of the inertia mass element 14 can be increased and decreased by increasing and decreasing the number of the annular plates 14a (14a3, 14a4), but also the diameters of the annular plates to be used can be easily changed by changing the outer diameter of the annular strips constructing the outer circumferential wall 12b, and consequently, general versatility in increasing and decreasing the mass of the inertia mass element 14 is higher.

In any of the above embodiments, the elastic solid 13 is formed in advance, and this is press-fitted into a space between the annular fixing portion 11b of the hub 11 and the inner circumferential wall 12a of the frame 12, but a rubber material may be filled in the space between the annular fixing portion 11b and the inner circumferential wall 12a, and the filled rubber material may be vulcanized to be formed into the elastic solid 13.

The annular plate 14a of the inertia mass element 14 may be punched in its entirety by a press, but it is suitable to divide the annular plate 14a into a plurality of pieces and assemble them to form the annular plate. As shown in FIG. 7, arc-shaped ring pieces 21, which are a plurality of divided parts of the annular plate in its circumferential direction (for example, four or five parts), are punched from the long plate material 20, and by this punching, protruded pieces 21b are formed on the ring pieces 21 at one end, and fitting holes 21a fitted to the protruded piece 21b are formed at the other end at the same time. A plurality of ring pieces 21 are arranged in the circumferential direction to be placed in an annular form, the protruded piece 21b of one of the adjacent ring piece 21 is placed at the hole 21a of the other ring piece 21, so that the end portion of the ring piece 21 and 21 butt against each other, and the butted end portion is pressed to close-fit the protruded piece 21b into the hole 21a, whereby a plurality of ring pieces 21 are connected and formed into the annular plate.

If the ring pieces 21 are thus punched out of the plate material 20, as many the ring pieces 21 as possible, each of which has a predetermined linear length L, are taken from the plate material 20 having the width of the same width L or more, whereby waste of the material can be substantially eliminated.

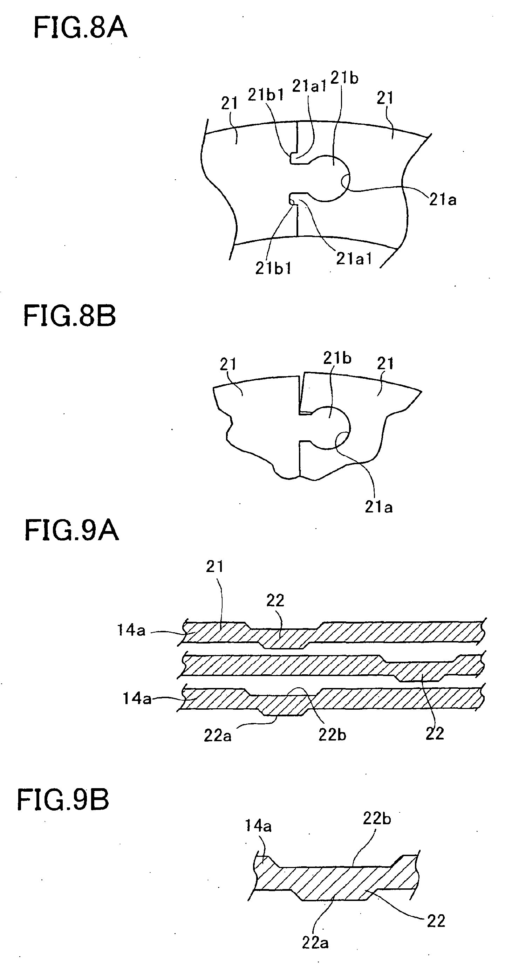

On close-fitting of the protruded piece 21b and the hole 21a, the hole 21a is forced to expand by the protruded piece 21b, and therefore the part around the hole 21a of the ring piece 21 is deformed in the radius direction, and the outer part of the hole 21a in the radius direction especially tends to open outward as shown in FIG. 8(b). More preferably, rectangular concave portions 21b1 are provided at both sides of a base part of the protruded piece 21b of the ring piece 21 as shown in FIG. 8(a), and rectangular convex portions 21a1 fitted into the rectangular concave portions 21b1 are placed at both sides of an open end of the hole 21a of the ring piece 21. If the concave portions 21b1 at the both sides of the base part of the protruded piece 21b of the ring piece 21, and the convex portions 21a1 at the both sides of the open end of the hole 21a of the ring piece 21 are fitted to each other, deformation can be pressed down and absorbed at the spot of the fitting portion of the convex portions 21a1 and the concave portions 21b1, and therefore the outer part of the hole 21a in the radius direction can be surely prevented from opening outward.

The concave portions 21b1 at a base portion of the protruded piece 21b and the convex portion 21a1 at the open end of the hole 21a may be formed only at an outer portion which easily opens. It is preferable that the concave portions 21b1 and the convex portion 21a1 are rectangular, because the rectangular shape provides a strong engaging force, but they may be formed to be circular and the like other than rectangular.

There is the case in which the annular plate 14a is pressed in the thickness direction to secure the dimension of the annular plate 14, and in this case, an expanding force is applied to the ring piece 21, but if the fitting portions of the convex portions 21a1 and the concave portions 21b1 are provided, excellent shape retainability of the ring pieces 21 is provided.

An adhesive can be used to bond the laminated annular plates 14a, but in order to improve productivity, it is preferred to form engaging pieces at the annular plates 14a and bond them mechanically by a press. The engaging piece is shown in FIG. 7, and in this example, a half blanking work is performed for a center part of the arc of the ring piece 21, and two half-blanked pieces (cut-and-bent pieces) 21c are bent and raised from the surface of the ring piece 21 to protrude.

After the ring pieces 21 are joined and formed to be the annular plate 14, a plurality of annular plates 14a are overlaid on each other so that the cut-and-bent pieces 21c are overlaid on each other. The laminate of the annular plates are pressed, and the cut-and-bent piece 21c of one of the overlaid annular plates is fitted into the hole portion of the cut-and-bent portion 21c formed at the other annular plate, whereby the annular plates are bonded to each other. The annular plates are bonded to each other in the close-contact state with substantially no clearance between them by deformation by a press.

It goes without saying that an annular plate with no joint, which is punched out in its entirety, may be used for the annular plate with the cut-and-bent pieces being formed, instead of the annular plate made by joining the ring pieces. For the annular plate with no joint, the cut-and-bent pieces are formed with spaces provided in the circumferential direction, and the laminate of the annular plates is similarly bonded by pressing.

Bonding may be performed by forming a dowel as a bonding piece. As shown in FIG. 9, a dowel 22 protruded from one surface of the ring piece 21 to the other surface is formed by a half pierce work by a press, and after the ring pieces 21 are joined to be formed into the annular plate 14a, a plurality of annular plates 14a are overlaid on each other so that the dowels 22, are displaced in the circumferential direction. It is preferred that the dowels 22 of every other annular plate 14a be overlaid on each other. Then, the laminate of the annular plates 14a is pressed, convex portions 22a of the dowels 22 of one of the overlaid annular plates 14a are bit in the surface of the other annular plate 14a, whereby a plurality of annular plates 14a are bonded. The volume of the plate material of the opposed surface, which is squeezed out by the convex portion 22a of the dowel 22 biting in the opposed surface, moves to a concave portion 22b of the dowel 22 to fill the concave portion 22b, and does not move in the outer circumferential direction and the like, and therefore high precision of the outer diameter dimension is provided. This also bonds the annular plates 14a to each other in the close-contact state with substantially no clearance.

In this case, it is preferred to form the convex portion 22a of the dowel 22 to be narrower than the concave portion 22b. If the convex portion 22a is made narrower than the concave portion 22b, the convex portion 22a can be formed to be high by ejection by half-piercing work which obtains the convex portion 22a and the concave portion 22b at the same time. Accordingly, bite of the convex portion 22a into the surface of the annular plate 14 is sharpened, which increases the biting force, and bonding strength of the annular plates to each other becomes high. The shape stability of the obtained inertia mass element 14 is improved.

It goes without saying that the annular plate with the dowels being formed may be an annular plate with no joint, which is punched out in its entirety, instead of the annular plate made by joining the ring pieces. For the annular plate with no joint, the dowels are formed with spaces provided in the circumferential direction, and the laminate of the annular plates is similarly bonded by pressing.

According to the present invention, joining by means of pins, screws and the like may be performed in addition to or instead of the joining by means of the dowels and the like of the annular plates 14a. A joining method by means of the pins is shown in FIG. 10. Pin holes 24 are formed at a plurality of spots in the circumferential direction of the annular plate 14a. The annular plate 14a may be the one that is punched out in its entirety by a press as the conventional ones, or may be the one that is made by joining the arc-shaped ring pieces that are punched out, and on the punching, or after the punching, holes 24 are formed by pressing. A plurality of annular plates 14a are overlaid on each other so that the pin holes 24 are overlaid on each other, a pin 25 having conical concave portions 25a at its both ends is inserted into the pin hole 24 of the laminate of the annular plates 14a, choking jigs (not shown) of substantially the same shape are applied to the concave portion 25a at the both ends and pressed, and the pin 25 is choked by pressing the concave portions 25a to expand from the state shown by the chain double-dashed line to the state shown by the solid line, whereby the laminated annular plates 14a are bonded.

In this case, in order to prevent the end portions of the pin 25 from protruding outward from the laminate of the annular plates 14a, it is preferred to expand the diameter of the open ends 24a of the pin hole 24 of the annular plates 14a located at the outermost layer to an outside by chamfering or the like to make it possible to absorb deformation margin of the end portions of the pin 25. If the pin 25 is somewhat made shorter, the deformation margin is not always necessary.

As explained so far, according to the torsional damper pulley of the present invention, the annular pulley body substantially rectangular in section having a predetermined inertia mass is constructed by an annular frame substantially U-shaped in section, having a concave portion open in its axial direction and having a pulley groove on its outer circumferential part, and an annular inertia mass element fixed in the concave portion, and therefore general versatility is improved, its production is facilitated, and reduction in the production cost becomes possible. Especially when the inertia mass element is constructed by overlaying a plurality of annular plates and bonding them, the mass of the inertia mass element can be easily adjusted by increasing, decreasing and the like of the number of laminated annular plates, and therefore general versatility of the damper pulley can be further improved.

## Claims

1. A torsional damper pulley comprising a hub (11) fixed at a revolving shaft of an internal combustion engine, an annular pulley body (10) substantially rectangular in section, which is coaxially placed outside said hub in its diameter direction, has a pulley groove (16) at an outer circumferential portion and has a predetermined inertia mass, and an elastic solid (13) interposed between an outer circumferential surface of said hub and an inner circumferential surface of said pulley body, wherein said pulley body comprises an annular metallic frame (12) substantially U-shaped in section, which has a concave portion open in its axial direction and has a pulley groove (16) at an outer circumferential portion, and an annular inertia mass element (14) fixed in said concave portion, wherein said inertia mass element is comprised of a laminate of annular plates which is formed by bonding arc-shaped ring pieces in a circumferential direction and a width direction.

2. The torsional damper pulley according to claim 1, wherein a protruded piece or a fitting hole fitted to the protruded piece is formed at one end of said ring piece, said hole or said protruded piece is formed at the other end of said ring piece, and said ring pieces are bonded in a circumferential direction by close-fitting the protruded piece of one of ring pieces adjacent in a circumferential direction into the hole of the other one of the adjacent ring pieces, wherein a concave portion is formed at both sides of a base portion of said protruded piece of said ring piece, and a protruded portion fitted in the concave portion is formed at an open end of said hole, and when the protruded piece of one of said ring pieces adjacent in a circumferential direction is close-fitted into the hole of the other one of said adjacent ring pieces, the concave portion of the base portion of said protruded piece is close-fitted into the protruded portion of said hole.

3. The torsional damper pulley according to any one of claim 1 or 2, wherein dowels protruded from one surface of said ring piece to the other surface are formed, and said ring pieces are bonded in a width direction by overlaying said ring pieces adjacent in a width direction so that the dowels are displaced in a circumferential direction and pressing them.

4. The torsional damper pulley according to claim 3, wherein a convex portion of said dowel is formed to be narrower than a concave portion.

5. The torsional damper pulley according to any one of claims 1, 2, 3, 4, wherein the annular plate is formed by bonding said ring pieces in a circumferential direction, and said laminate is formed by bonding a plurality of the annular plates in a width direction of said ring piece.

6. The torsional damper pulley according to any one of claims 1, 2, 3 to 5, wherein said inertia mass element comprises an annular plate having an inner diameter to be in pressure-contact with an inner surface of the inner circumferential wall for defining the concave portion of said pulley body, and said inertia mass element is fixed by being press-fitted into said concave portion.

7. The torsional damper pulley according to any one of claims 1, 2, 3 to 5 wherein said inertia mass element comprises an annular plate having an outer diameter to be in pressure-contact with an inner surface of an outer circumferential wall for defining the concave portion of said pulley body, and said inertia mass element is fixed by being press-fitted into said concave portion.

8. The torsional damper pulley according to any one of claims 1, 2, 3 to 5, wherein said inertia mass element comprises a first annular plate having an outer diameter to be in pressure-contact with an inner surface of an outer circumferential wall for defining the concave portion of said pulley body, and a second annular plate having an inner diameter to be in pressure-contact with an inner surface of an inner circumferential wall for defining said concave portion, and said inertia mass element is fixed by being press-fitted into said concave portion.

9. The torsional damper pulley according to any one of claims 1, 2, 3 to 5, wherein said inertia mass element is fixed to the concave portion of said pulley body with fastening means including a bolt.

10. The torsional damper pulley according to any one of claims 1, 2, 3 to 9, wherein an adhesive and/or a resin are/is filled into the concave portion of said pulley body into which said inertia mass element is inserted.

11. The torsional damper pulley according to any one of claims 1, 2, 3 to 10, wherein convex portions outward or inward in a diameter direction are provided at the same positions in a width direction of the outer circumferential portion of said hub and an inner circumferential wall for defining a concave portion of said pulley body.

12. The torsional damper pulley according to any one of claims 1, 2, 3 to 11, wherein a wall portion for connecting an inner circumferential wall and an outer circumferential wall for defining the concave portion of said pulley body is omitted, whereby said concave portion is formed to be a through-hole open to both sides in an axial direction, said inertia mass element is formed by overlaying a plurality of annular plates on each other and bonding them so that at least one annular plate having an inner diameter and outer diameter to be in pressure-contact with said inner circumferential wall and outer circumferential wall is placed, and said inertia mass element is press-fitted into said through-hole.

## Patentansprüche

1. Torsionsdämpfer-Riemenscheibe, umfassend eine Nabe (11), die an einer sich drehenden Welle eines Verbrennungsmotors befestigt ist, einen ringförmigen, im Querschnitt im Wesentlichen rechteckigen Riemenscheibenkörper (10), welcher koaxial außerhalb der Nabe in deren Durchmesserrichtung angeordnet ist, eine Riemenscheibennut (16) an seinem Außenumfangsbereich und eine vorgegebene Massenträgheit aufweist, und einen elastischen Körper (13), der zwischen einer Außenumfangsfläche der Nabe und einer Innenumfangsfläche des Riemenscheibenkörpers angeordnet ist, worin der Riemenscheibenkörper einen ringförmigen, im Querschnitt im Wesentlichen U-förmigen Metallrahmen (12) umfasst, welcher einen konkaven, in seiner axialen Richtung offenen Bereich umfasst und eine Riemenscheibennut (16) an seinem Außenumfangsbereich aufweist, und ein ringförmiges Massenträgheitselement (14), das in dem konkaven Bereich befestigt ist, worin das Massenträgheitselement sich aus einem Laminat ringförmiger Platten zusammensetzt, welches durch Verkleben bogenförmiger Ringstücke in einer Umfangsrichtung und einer Dickenrichtung ausgebildet ist.

2. Torsionsdämpfer-Riemenscheibe gemäß Anspruch 1, worin ein vorstehendes Stück oder ein zu dem vorstehenden Stück passendes Passloch an einem Ende des Ringstücks ausgebildet ist, das Loch oder das vorstehende Stück an dem anderen Ende des Ringstücks ausgebildet ist, und die Ringstücke in einer Umfangsrichtung unter enger Passung des vorstehenden Stücks eines in Umfangsrichtung benachbarten Ringstücks in das Loch des anderen, benachbarten Ringstücks geklebt sind, worin ein konkaver Bereich auf beiden Seiten eines Basisbereichs des vorstehenden Stücks des Ringstücks ausgebildet ist, und ein zu dem konkaven Bereich passender, vorstehender Bereich an einem offenen Ende des Loches ausgebildet ist, und wenn das vorstehende Stück eines der in einer Umfangsrichtung benachbarten Ringstücke eng in das Loch des anderen der benachbarten Ringstücke eingepasst ist, der konkave Bereich des Basisbereichs des vorstehenden Stücks in den vorstehenden Bereich des Lochs eng eingepasst ist.

3. Torsionsdämpfer-Riemenscheibe gemäß einem der Ansprüche 1 oder 2, worin Passstifte, die von einer Oberfläche des Ringstückes zu der anderen Oberfläche vorstehen, ausgebildet sind, und die Ringstücke in einer Dickenrichtung durch in Dickenrichtung benachbartes Überlagern der Ringstücke verklebt sind, so dass die Passstifte in einer Umfangsrichtung verschoben werden und gepresst werden.

4. Torsionsdämpfer-Riemenscheibe gemäß Anspruch 3, worin ein konvexer Bereich des Passstiftes so ausgebildet ist, dass er schmaler als ein konkaver Bereich ist.

5. Torsionsdämpfer-Riemenscheibe gemäß einem der Ansprüche 1, 2, 3, 4, worin die ringförmige Platte durch Verkleben der Ringstücke in einer Umfangsrichtung ausgebildet ist, und das Laminat durch Verkleben mehrerer ringförmiger Platten in Dickenrichtung des Ringstücks ausgebildet ist.

6. Torsionsdämpfer-Riemenscheibe gemäß einem der Ansprüche 1, 2, 3 bis 5, worin das Massenträgheitselement eine ringförmige Platte aufweist, die einen Innendurchmesser hat, um in Presskontakt mit einer inneren Oberfläche der Innenumfangswand zu stehen, um den konkaven Bereich des Riemenscheibenkörpers vorzugeben, und worin das Massenträgheitselement in dem konkaven Bereich presspassend befestigt ist.

7. Torsionsdämpfer-Riemenscheibe gemäß einem der Ansprüche 1, 2, 3 bis 5, worin das Massenträgheitselement eine ringförmige Platte aufweist, die einen Außendurchmesser hat, um in Presskontakt mit einer inneren Oberfläche einer Außenumfangswand zu stehen, um den konkaven Bereich des Riemenscheibenkörpers vorzugeben, und worin das Massenträgheitselement in dem konkaven Bereich presspassend befestigt ist.

8. Torsionsdämpfer-Riemenscheibe gemäß einem der Ansprüche 1, 2, 3 bis 5, worin das Massenträgheitselement eine erste ringförmige Platte, die einen Außendurchmesser hat, um in Presskontakt mit einer inneren Oberfläche einer Außenumfangswand zu stehen, um den konkaven Bereich des Riemenscheibenkörpers vorzugeben, und eine zweite ringförmige Platte aufweist, die einen Innendurchmesser hat, um in Presskontakt mit einer inneren Oberfläche einer Innenumfangswand zu stehen, um den konkaven Bereich des Riemenscheibenkörpers vorzugeben und worin das Massenträgheitselement in dem konkaven Bereich presspassend befestigt ist.

9. Torsionsdämpfer-Riemenscheibe gemäß einem der Ansprüche 1, 2, 3 bis 5, worin das Massenträgheitselement mittels Befestigungsmitteln, die einen Bolzen oder eine Schraube beinhalten, an dem konkaven Bereich des Riemenscheibenkörpers befestigt ist.

10. Torsionsdämpfer-Riemenscheibe gemäß einem der Ansprüche 1, 2, 3 bis 9, worin ein Klebstoff und/oder ein Harz in den konkaven Bereich des Riemenscheibenkörpers, in den das Massenträgheitselement eingesetzt ist, gefüllt ist/sind.

11. Torsionsdämpfer-Riemenscheibe gemäß einem der Ansprüche 1, 2, 3 bis 10, worin konvexe Bereiche nach außen oder nach innen in einer Durchmesserrichtung an denselben Stellen in einer Dickenrichtung des Außenumfangsbereichs der Nabe und einer Innenumfangswand vorgesehen sind, um einen konkaven Bereich des Riemenscheibenkörpers vorzugeben.

12. Torsionsdämpfer-Riemenscheibe gemäß einem der Ansprüche 1, 2, 3 bis 11, worin ein Wandbereich zur Verbindung einer Innenumfangswand und einer Außenumfangswand zur Vorgabe des konkaven Bereichs des Riemenscheibenkörpers weggelassen ist, wodurch der konkave Bereich durch ein Durchgangsloch gebildet wird, das auf beiden Seiten in einer Axialrichtung offen ist, worin das Massenträgheitselement durch Überlagerung mehrerer ringförmiger Platten aufeinander und deren Verkleben so ausgebildet ist, dass wenigstens eine ringförmige Platte mit einem Innendurchmesser und einem Außendurchmesser, in Presskontakt mit der Innenumfangswand und der Außenumfangswand angeordnet ist, und das Massenträgheitselement in das Durchgangsloch presspassend eingesetzt ist.

## Revendications

1. Poulie d'amortisseur à torsion comprenant un moyeu (11) fixé à un arbre rotatif d'un moteur à combustion interne, un corps (10) de poulie annulaire sensiblement rectangulaire en coupe, qui est placé de manière coaxiale à l'extérieur dudit moyeu dans la direction de son diamètre, a une gorge (16) de poulie au niveau d'une surface circonférentielle externe et a une masse d'inertie prédéterminée, et un solide élastique (13) intercalé entre une surface circonférentielle externe dudit moyeu et une surface circonférentielle interne dudit corps de poulie, dans laquelle ledit corps de poulie comprend un cadre métallique annulaire (12) sensiblement en U en coupe, qui a une portion concave ouverte dans sa direction axiale et a une gorge (16) de poulie au niveau d'une portion circonférentielle externe, et un élément de masse d'inertie annulaire (14) fixé dans ladite portion concave, dans laquelle ledit élément de masse d'inertie est composé d'un stratifié de plaques annulaires qui est formé par liaison de pièces de bagues en arc dans une direction circonférentielle et une direction de largeur.

2. Poulie d'amortisseur à torsion selon la revendication 1, dans laquelle une pièce en saillie ou un trou d'ajustement ajusté à la pièce en saillie est formée au niveau d'une extrémité de ladite pièce de bague, ledit trou ou ladite pièce en saillie est formé au niveau de l'autre extrémité de ladite pièce de bague, et lesdites pièces de bagues sont liées dans une direction circonférentielle par ajustement étroit de la pièce en saillie d'une parmi des pièces de bagues adjacente dans une direction circonférentielle dans le trou de l'autre pièce parmi les pièces de bagues adjacentes, dans laquelle une portion concave est formée au niveau des deux côtés d'une portion de base de ladite pièce en saillie de ladite pièce de bague, et une portion en saillie ajustée dans la portion concave est formée au niveau d'une extrémité ouverte dudit trou, et lorsque la pièce en saillie d'une desdites pièces de bagues adjacentes dans une direction circonférentielle est ajustée étroitement dans le trou de l'autre pièce parmi lesdites pièces de bagues adjacentes, la portion concave de la portion de base de ladite pièce en saillie est ajustée étroitement dans la portion en saillie dudit trou.

3. Poulie d'amortisseur à torsion selon l'une quelconque des revendications 1 ou 2, dans laquelle des goupilles de positionnement sont formées en saillie depuis une surface de ladite pièce de bague jusqu'à l'autre surface, et lesdites pièces de bagues sont liées dans une direction de largeur par superposition desdites pièces de bagues adjacentes dans une direction de largeur de sorte que les goupilles de positionnement sont déplacées dans une direction circonférentielle et qu'une pression est exercée sur celles-ci.

4. Poulie d'amortisseur à torsion selon la revendication 3, dans laquelle une portion convexe de ladite goupille de positionnement est formée afin d'être plus étroite qu'une portion concave.

5. Poulie d'amortisseur à torsion selon l'une quelconque des revendications 1, 2, 3, 4, dans laquelle la plaque annulaire est formée par liaison desdites pièces de bague dans une direction circonférentielle, et ledit stratifié est formé par liaison d'une pluralité des plaques annulaires dans une direction de largeur de ladite pièce de bague.

6. Poulie d'amortisseur à torsion selon l'une quelconque des revendications 1, 2, 3 à 5, dans laquelle ledit élément de masse d'inertie comprend une plaque annulaire ayant un diamètre interne devant être en contact par pression avec une surface interne de la paroi circonférentielle interne pour définir la portion concave dudit corps de poulie, et ledit élément de masse d'inertie est fixé en étant ajusté par pression dans ladite portion concave.

7. Poulie d'amortisseur à torsion selon l'une quelconque des revendications 1, 2, 3 à 5, dans laquelle ledit élément de masse d'inertie comprend une plaque annulaire ayant un diamètre externe devant être en contact par pression avec une surface interne d'une paroi circonférentielle externe pour définir la portion concave dudit corps de poulie, et ledit élément de masse d'inertie est fixé en étant ajusté par pression dans ladite portion concave.

8. Poulie d'amortisseur à torsion selon l'une quelconque des revendications 1, 2, 3 à 5, dans laquelle ledit élément de masse d'inertie comprend une première plaque annulaire ayant un diamètre externe devant être en contact par pression avec une surface interne d'une paroi circonférentielle externe pour définir la portion concave dudit corps de poulie, et une seconde plaque annulaire ayant un diamètre interne devant être en contact par pression avec une surface interne d'une paroi circonférentielle interne pour définir ladite portion concave, et ledit élément de masse d'inertie est fixé en étant ajusté par pression dans ladite portion concave.

9. Poulie d'amortisseur à torsion selon l'une quelconque des revendications 1, 2, 3 à 5, dans laquelle ledit élément de masse d'inertie est fixé sur la portion concave dudit corps de poulie à l'aide d'un moyen d'attache comportant un boulon.

10. Poulie d'amortisseur à torsion selon l'une quelconque des revendications 1, 2, 3 à 9, dans laquelle un adhésif et/ou une résine remplit la portion concave dudit corps de poulie dans laquelle ledit élément de masse d'inertie est inséré.

11. Poulie d'amortisseur à torsion selon l'une quelconque des revendications 1, 2, 3 à 10, dans laquelle des portions convexes vers l'extérieur ou vers l'intérieur dans une direction de diamètre sont prévues au niveau des mêmes positions dans une direction de largeur de la portion circonférentielle externe dudit moyeu et une paroi circonférentielle interne pour définir une portion concave dudit corps de poulie.

12. Poulie d'amortisseur à torsion selon l'une quelconque des revendications 1, 2, 3 à 11, dans laquelle une portion de paroi destinée à raccorder une paroi circonférentielle interne et une paroi circonférentielle externe pour définir la portion concave dudit corps de poulie est omise, moyennant quoi ladite portion concave est formée afin d'être un trou débouchant ouvert vers les deux côtés dans une direction axiale, ledit élément de masse d'inertie est formé par superposition d'une pluralité de plaques annulaires les unes sur les autres et en les liant de sorte qu'au moins une plaque annulaire ayant un diamètre interne et un diamètre externe devant être en contact par pression avec ladite paroi circonférentielle interne et ladite paroi circonférentielle externe est placée, et ledit élément de masse d'inertie est ajusté par pression dans ledit trou débouchant.
